# EUROPÄISCHE PATENTSCHRIFT

(11) **EP 1 666 748 B1**
(45) Veröffentlichungstag und Bekanntmachung des Hinweises auf die Patenterteilung: **21.03.2007**
(21) Anmeldenummer: 04027593.5
(22) Anmeldetag: 19.11.2004
(51) Int. Cl.: F16D 1/09

(54) **Reibschlüssige Drehverbindung**
Frictional revolving joint
Liaison rotative à friction

(43) Veröffentlichungstag der Anmeldung: 07.06.2006
(73) Patentinhaber: TAS Schäfer GmbH, 58300 Wetter (DE)
(72) Erfinder: Schäfer, Udo, 58452 Witten (DE); Oppenländer, Harry, 58300 Wetter (DE)
(74) Vertreter: Wenzel & Kalkoff

(56) Entgegenhaltungen:
- DE-A1- 2 514 313
- US-A- 5 857 783
- US-A- 5 947 626
- PATENT ABSTRACTS OF JAPAN Bd. 018, Nr. 644 (M-1718), 7. Dezember 1994 (1994-12-07) & JP 06 249254 A (TSUBAKIMOTO CHAIN CO), 6. September 1994 (1994-09-06)

## Beschreibung

Die vorliegende Erfindung bezieht sich auf eine reibschlüssige Drehverbindung mit
- einer auf eine Welle aufsetzbaren Hohlwelle und einer Keilringanordnung aus mindestens einem Keilringabschnitt mit einer Innenfläche zur Anlage an die Hohlwelle und mit einer schrägen Außenfläche,
- mindestens einem Spannringelement mit schräger Innenfläche, das zwischen einer Ausgangslage und einer Spannlage auf der schrägen Außenfläche des Keilringabschnitts gleitet und
- Spannmitteln zum Bewegen des Spannringelementes in die Spannlage.

Eine reibschlüssige Drehverbindung der vorstehend angegebenen Art ist aus DE 25 14 313 A1 als lösbare Welle/Nabe-Verbindung zum Verbinden von zwei Wellenenden bekannt. Die Hohlwelle ist ein zwei miteinander zu verbindende Wellenenden umfassender Ring, auf dem zwei Druckringe mit schräger Außenfläche und zwei Spannscheiben mit schräger Innenfläche, die jeweils dem vorstehenden Spannringelement entsprechen, sowie als Spannmittel eine Spannvorrichtung angeordnet sind, die aus Spannschrauben und an diesen verstellbaren Kulissensteinen besteht. Zur Verbindung der beiden Wellenenden werden die Spannschrauben der Welle/Nabe-Verbindung angezogen. Dadurch gleiten die Kulissensteine an den Spannschrauben nach außen und üben über die Spannscheiben und die Druckringe radiale Kräfte auf den Ring und die mit dem Ring zu verbindenden Wellenenden aus. Dabei spreizen die Kulissensteine die Spannscheiben - ausgehend von einer Ausgangslage - in axialer Richtung, bis eine Spannlage erreicht ist, in der die Welle/Nabe-Verbindung fest mit den beiden Wellenenden verbunden ist.

Die Sicherung der Spannscheiben in der Spannlage übernehmen die Kulissensteine in Verbindung mit den Spannschrauben, indem die Kulissensteine ein Zurückgleiten der beiden Spannscheiben aus der Spannlage in die Ausgangslage verhindern. Die Kulissensteine und Spannschrauben bilden folglich die Spannmittel, mit denen die Spannscheiben in die Spannlage gebracht und in der Spannlage gehalten und auf diese Weise gesichert werden. Ob die Spannscheiben ausreichende radiale Kräfte für eine sichere reibschlüssige Verbindung zwischen dem Ring und den beiden Wellenenden bewirken, hängt von dem Geschick des Bedienungspersonals ab, das die Spannschrauben anzieht. Es ist darauf zu achten, daß die Kulissensteine jeweils möglichst gleich große Kräfte auf die Spannscheiben übertragen, damit die Spannscheiben längs des inneren Umfangs gleichmäßig belastet werden. Nach dem Spannen der Spannscheiben wirkt deren Rückstellkraft aufgrund der schrägen Kontaktflächen der Kulissensteine und der Spannscheiben permanent in Richtung der Ausgangslage auf die Kulissensteine und ebenso auf die Spannschrauben. Damit wirken die Rückstellkräfte der Sicherung der Spannscheiben in der Spannlage entgegen.

Reibschlüssige Drehverbindungen der eingangs genannten Art sind aus EP 0 812 397 B1 auch für Verbindungen einer Welle mit einer Hohlwelle im Stand der Technik bekannt. Die dort dargestellte Vorrichtung weist eine auf die Hohlwelle aufschiebbare Keilringanordnung aus zwei Keilringabschnitten auf, die schräge Außenflächen aufweist, welche im Querschnitt der Keilringanordnung zur Mitte abfallen. Auf den schrägen Außenflächen der Keilringanordnung befinden sich zwei Spannringelemente mit entsprechend an die schrägen Außenflächen der Keilringanordnung angepassten schrägen Innenflächen, wodurch die Spannringelemente auf der Keilringanordnung gleitfähig sind. Durch Anlegen eines hydraulischen Drucks an einen in einem Spannring gebildeten hydraulischen Anschluß entsteht eine Druckringkammer zwischen den Spannringelementen. Die Druckringkammer wird auf der Außenseite durch eine Ringschulter eines Spannringelements begrenzt. Auf der Innenseite wird die Druckringkammer durch ein Zwischenringelement begrenzt. Die Druckringkammer ist an der Ringschulter und an dem Zwischenringelement durch Ringdichtungen in jeder Stellung der Spannringelemente abgedichtet.

Durch Anlegen eines hydraulischen Drucks an die Druckringkammer werden die Spannringelemente beabstandet und erreichen eine Spannlage, in der die Spannringelemente Druck über die Schrägflächen der Keilringanordnung auf die Hohlwelle ausüben, so daß eine reibschlüssige Drehverbindung zwischen Hohlwelle und Welle entsteht.

Damit der hydraulische Druck nicht permanent während des Betriebs aufrechterhalten werden muß, ist eine mechanische Sicherung der Spannringelemente in der Spannlage vorgesehen. Hierzu sind auf dem Umfang der Spannringelemente seitlich Halteschrauben angeordnet.

Eine weitere reibschlüssige Drehverbindung ist in der DE 43 32 477 offenbart. Diese Vorrichtung weist im Gegensatz zu der eingangs erwähnten Vorrichtung neben zwei Spannringelementen einen feststehenden Lagerring auf. Eine Druckringkammer ist hier zwischen dem Lagerring und dem nebengeordneten Spannringelement gebildet.

Ein wesentlicher Nachteil der bekannten Vorrichtungen liegt darin, daß die Montage sehr aufwendig ist, da zur Sicherung der Spannringelemente in der Spannlage das Anziehen der Halteschrauben notwendig ist. Zum Lösen der reibschlüssigen Verbindung sind wiederum zunächst die Halteschrauben zu lösen. Ein weiterer Nachteil liegt darin, daß, bestimmt durch die maximale Festigkeit und maximale Anzahl der Schrauben auf dem Umfang der Spannringelemente, eine maximale Kraftübertragung vorgegeben ist. Somit ist ein maximal übertragbares Drehmoment der Drehverbindung gegeben. Gerade bei Einsatz einer reibschlüssigen Drehverbindung in modernen Windkraftanlagen reicht das derzeit erreichbare maximale Drehmoment der Verbindung nicht aus.

Es ist daher Aufgabe der vorliegenden Erfindung, eine reibschlüssige Drehverbindung der Eingangs genannten Art zu schaffen, die ein hohes übertragbares Drehmoment der Verbindung bei gleichzeitiger vereinfachter Montage ermöglicht.

Erfindungsgemäß wird die Aufgabe dadurch gelöst, daß bei einer reibschlüssigen Drehverbindung außer den Spannmitteln mindestens ein gesondertes Sicherungselement zum Festsetzen des Spannringelementes in der Spannlage vorgesehen ist, das in radialer Richtung unabhängig von den Spannmitteln von einer freien Position in eine Klemmposition führbar ist, in der das Sicherungselement das Spannringelement axial arretiert.

Hierdurch ergibt sich der Vorteil einer möglichst einfachen Konstruktion und eines kurzen Weges zwischen freier Position und Klemmposition des Sicherungselementes. Desweiteren ist die radiale Richtung vorteilhaft senkrecht zur Bewegungsrichtung der Spannringelemente. Dadurch ist verhindert, daß die auf das Sicherungselement von dem Spannringelement einwirkenden Kräfte eine Bewegung des Sicherungselemehtes aus der Klemmposition bewirken, wodurch eine unbeabsichtigte Aufhebung der Arretierung des Spannringelementes verhindert ist. Das Spannringelement sollte jedoch so ausgelegt sein, daß eine Betätigung des Sicherungselements aus der freien Position in die Klemmposition leicht möglich ist. Bspw. könnte hierzu das Spannringelement eine geeignete Aussparung aufweisen, die der Aufnahme des Sicherungselementes in der freien Position dient und geeignete Führungen für die Bewegung des Sicherungselemetes bereitstellt.

Die Anordnung kann einfach ausgebildet sein, d. h. mit nur einem Keilring und einem Spannringelement. Diese können axial neben einem axial feststehenden Lagerring auf der Hohlwelle angeordnet sein. Bevorzugt ist aber eine Anordnung mit zwei Keilringelementen und zwei Spannringelementen, wobei das Sicherungselement in der Klemmposition zwischen den Spannringelementen angeordnet ist. Bezüglich der freien Position des Sicherungselementes ist insbesondere vorteilhaft, daß die Aussparung mittig zwischen den Spannringelementen angeordnet ist.

Die freie Bewegung des Sicherungselementes in die Klemmposition ist mindestens in der Spannlage der Spannringelemente möglich. Zum Erreichen der Spannlage der Spannringelemente werden die Spannmittel eingesetzt. Diese sind bevorzugt als hydraulische Druckmittel ausgebildet, besonders bevorzugt umfassen sie eine Druckringkammer mit hydraulischem Anschluß. Zum Spannen wird zuvor ein festgelegter Druck über den hydraulischen Anschluß an die Druckringkammer angelegt, wodurch die Spannringelemente auf der Keilringanordnung axial auseinandergleiten. Hierbei kann die Druckringkammer direkt zwischen den Spannringelementen ausgebildet sein und somit direkt auf beide Spannringelemente wirken, aber auch indirekt Kraft auf mindestens ein Spannringelement ausüben, beispielsweise durch Anordnung zwischen einem Spannringelement und einem nebenstehenden in Axialrichtung feststehenden Lagerring. Nachdem das Sicherungselement die Klemmposition erreicht hat, verhindert das Sicherungselement ein unbeabsichtigtes Zurückgleiten der Spannringelemente in die Ausgangslage. Das Sicherungselement kann hierbei direkt zwischen den Spannringelementen angeordnet sein, aber auch eine indirekte Verklemmung oder Verkeilung der Spannringelemente bewirken. Hierzu könnten bspw. als Sicherungselemente wirkende Klemmringelemente mit ringförmigen, im Umfang konischen Schrägflächen verwendet werden, die durch eine Relativbewegung der Klemmringelemente in Umfangsrichtung aus der freien Position in die Klemmposition verschiebbar sind. Durch die dadurch hervorgerufene Änderung der gemeinsamen axialen Breite der Klemmringelemente ist so eine Arretierung der Spannringelemente möglich.

Das Sicherungselement sollte so ausgelegt sein, daß es der mechanischen Belastung in der Klemmposition als auch während der Betätigung stand hält. Vorzugsweise weist das Sicherungselement möglichst große Eingriffsflächen mit den Spannringelementen auf, die weiterhin bevorzugt gleichmäßig über den Umfang der Drehverbindung verteilt sind, um eine gleichmäßige Druck-/Kraftverteilung auf die Sicherungselemente in der Spannlage der reibschlüssigen Drehverbindung zu erreichen. Weiterhin bevorzugt besteht das Sicherungselement aus hochfestem Stahl.

Gemäß einer zweckmäßigen Weiterbildung der Erfindung ist das Sicherungselement segmentförmig ausgebildet (Anspruch 3). Insbesondere bevorzugt ist das Sicherungselement in der Ebene senkrecht zur Wellenachse segmentförmig ausgebildet.

Vorzugsweise sind drei Sicherungselemente auf einer Umfangslinie der Keilringanordnung angeordnet (Anspruch 4). Hierdurch ergibt sich eine vorteilhafte Druck- und Kraftverteilung in der reibschlüssigen Drehverbindung, wenn sich die Sicherungselemente in der Klemmposition befinden. Bei gleichmäßig beabstandeter Anordnung der drei Sicherungselemente auf dem Umfang der Keilringanordnung kann ein Verkanten der Spannringelemente vermieden werden. Zweckmäßig umreifen die Sicherungselemente den Umfang der Keilringanordnung im wesentlichen vollständig, insbesondere bei segmentförmiger Ausbildung der Sicherungselemente. Dadurch ist vorteilhafter Weise ein großflächiger Eingriff der Sicherungselemente mit den Spannringelementen gegeben.

Nach einer weiteren Weiterbildung der Erfindung ist ein Ringkolben in der Druckringkammer angeordnet, der eine Aufnahme für das Sicherungselement in der freien Position und eine Führung für die Bewegung bildet (Anspruch 5). Der Ringkolben ist hierbei so in der Druckringkammer angeordnet, daß ein ausreichender Druckaufbau in der Druckringkammer möglich ist. Insbesondere sollte der Ringkolben so ausgeführt sein, daß der hydraulische Anschluß der Druckringkammer nicht blockiert ist.

Die Aufnahme für das Sicherungselement in der freien Position im Ringkolben kann in der Druckringkammer liegen, sollte jedoch so ausgestaltet sein, daß das Sicherungselement in jeder Lage nicht mit dem Druckmedium, wie beispielsweise Hydrauliköl, in Berührung kommt. Die Aufnahme sollte ferner so beschaffen sein, daß, sobald sich die Spannringelemente in der Spannlage befinden, das Sicherungselement die Klemmposition leicht erreichen kann. Die Führung am Ringkolben sollte hierbei so ausgelegt sein, daß das Sicherungselement in keiner Position blockieren kann.

Bevorzugt ist weiterhin, daß der Ringkolben Ausnehmungen für Ringdichtungen aufweist, die die Druckringkammer gegenüber der Welle, dem Sicherungselement und der Umgebung abdichten (Anspruch 6). Die Ausnehmungen sollten hierbei so ausgelegt sein, daß die Ringdichtungen in jeder Stellung der Spannringelemente die Druckringkammer so abdichten, daß kein Druckmedium aus der Druckringkammer austritt. Insbesondere sollte eine Kontamination der schrägen Außenflächen der Keilringanordnung vermieden werden. Die freie Bewegung der Spannringelemente und des Sicherungselementes sollte durch die Ausnehmungen mit den Ringdichtungen nicht beeinträchtigt sein. Bevorzugt sind die Ringdichtungen O-Ringe.

Zweckmäßig weist das Sicherungselement mindestens eine Steuerstange auf, die sich durch eine Öffnung im Ringkolben von der Druckringkammer fluidgetrennt nach außen erstreckt (Anspruch 7). Durch eine derartige Anordnung ist eine Betätigung des Sicherungselementes von außen möglich. Die Öffnung im Ringkolben sollte hierbei eine ausreichende Führung für die Steuerstange aufweisen. Eine Abdichtung gegenüber der Druckringkammer kann bspw. durch eine Ringdichtung erreicht werden, jedoch sind auch grundsätzlich andere konstruktive Lösungen denkbar. Sind mehrere Sicherungselemente in einer reibschlüssigen Drehverbindung eingesetzt, so wird bevorzugt, daß an jedem Sicherungselement eine Steuerstange angeordnet ist und sich durch je eine Öffnung im Ringkolben nach Außen erstreckt.

Bevorzugt wirkt mindestens ein Federelement derart mit dem Sicherungselement zusammen, daß die Bewegung in die Klemmposition kraftunterstützt ist (Anspruch 8). Sobald die Spannringelemente aus der Ausgangslage die Spannlage erreicht haben, bewirkt das Federelement die selbstständige Bewegung des Sicherungselementes in die Klemmlage, wodurch vorteilhaft eine Selbstsicherung der Drehverbindung gegeben ist.

Zweckmäßig ist die Neigung der schrägen Außenflächen der Keilringabschnitte so gewählt, daß der mit der Mittelachse der Welle eingeschlossene Winkel größer 5°, vorzugsweise 7°-10° ist (Anspruch 9). In diesem Winkelbereich ist eine ausreichende Kraftübertragung auf die Hohlwelle und die Welle in der Spannlage der Spannringelemente bei kompaktem Aufbau der reibschlüssigen Drehverbindung gegeben.

Ein Ausführungsbeispiel der Erfindung ist in den Zeichnungen dargestellt und wird nachfolgend näher erläutert. Es zeigt:
Fig. 1 eine Schnittdarstellung einer Drehverbindung in Ausgangslage entlang der Schnittlinie B-B;
Fig. 2 eine Schnittdarstellung einer Drehverbindung in Spannlage entlang der Schnittlinie B-B;
Fig. 3 eine Schnittdarstellung einer Drehverbindung in Spannlage entlang der Schnittlinie A-A und
Fig. 4 eine schematische Draufsicht einer Drehverbindung entlang der Wellenachse.

Eine reibschlüssige Drehverbindung 1 besteht in funktioneller Hinsicht im wesentlichen aus einer Keilringanordnung 3 und zwei Spannringelementen 6a und 6b. Die Keilringanordnung 3 besteht aus zwei ineinander übergehenden Keilringabschnitten 4a und 4b. Die im wesentlichen glattflächige Innenseite der Keilringanordnung 3 stellt den Kontakt zu einer Hohlwelle 2 her. In der Hohlwelle ist eine Welle angeordnet. Die beiden Wellen können mit der Drehverbindung 1, wie nachstehend erläutert, trennbar reibschlüssig miteinander verbunden werden. Auf den schrägen Außenflächen 5a, 5b der Keilringabschnitte 4a, 4b sind zwei Spannringelemente 6a, 6b gleitfähig gelagert. Hierbei entspricht die Neigung der zur Achsmitte zeigenden Innenflächen der Spannringelemente 6a und 6b im wesentlichen der Neigung der schrägen Außenflächen 5a, 5b der Keilringabschnitte 4a und 4b. Eine mittig angeordnete ringförmige Ausnehmung in den Spannringelementen 6a, 6b bildet eine Druckringkammer 15. Die Druckringkammer 15 kann über einen hydraulischen Anschluß 14 unter Benutzung eines geeigneten Druckmediums, wie bspw. Hydrauliköl, mit Druck beaufschlagt werden, um eine Lageänderung, nämlich eine axiale Verschiebung, der Spannringelemente 6a, 6b zu bewirken.

Innerhalb der Druckringkammer 15 ist ein Ringkolben 7 angeordnet. Der Ringkolben 7 ist so ausgestaltet, daß der Druckauf- und -abbau in der Druckringkammer 15 über den hydraulischen Anschluß 14 nicht beeinträchtigt wird. Der Ringkolben 7 dient im wesentlichen zur Aufnahme der Sicherungselemente 8 und zur Abdichtung der Druckringkammer gegenüber der Welle, der Umgebung und der Sicherungselemente 8. Hierzu weist der Ringkolben 7 Ausnehmungen 10a-10d auf, in denen Ringdichtungen angeordnet sind. Die Ausnehmungen 10a-10d sind derart am Ringkolben 7 angeordnet, daß bei jeder Stellung der Spannringelemente 6a und 6b eine Abdichtung der Druckringkammer erreicht wird. Des weiteren weist der Ringkolben 7 radiale Bohrungen 18 auf, über die sich Stangen 9 vom Sicherungselement 8 nach Außen erstrecken. Durch Betätigung der Stangen 9 können die Sicherungselemente 8 von einer freien Position, in der sie sich in einer Aufnahme 16 im Ringkolben 7 befinden, in eine Klemmposition zwischen den Spannringelementen 6a, 6b gebracht werden.

Drei Haltebolzen 11 sind je Spannringelement 6a, 6b mit Schrauben 12 an diesen seitlich befestigt. Die Haltebolzen 11 erstrecken sich axial durch Bohrungen in den Spannringelementen 6a, 6b und im Ringkolben 7. Auf der jeweiligen der Schraube 12 des Haltebolzens 11 gegenüberliegenden Seite des Ringkolbens 7 ist eine Arretierung 13 an dem Haltebolzen 11 angeordnet. Die Arretierung 13 gibt eine maximale Spreizung der Spannringelemente 6a, 6b vor.

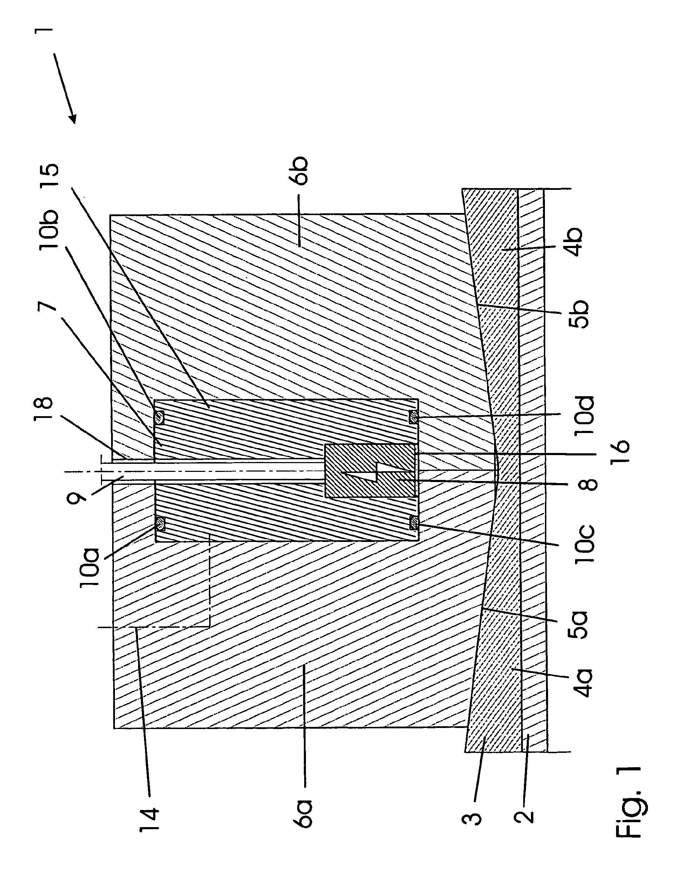

Fig. 1 ist eine Schnittdarstellung einer Drehverbindung entlang der Schnittlinie B-B. In Fig. 1 sind die Spannringelement 6a, 6b in einer Ausgangslage gezeigt, in der kein oder wenig Druck in der Druckringkammer 15 herrscht. Die Sicherungselemente 8 befinden sich in der freien Position in der Aufnahme 16 im Ringkolben 7. In dieser Stellung kann die Drehverbindung 1 auf die Hohlwelle 2 aufgeschoben werden. Die Hohlwelle 2 ist in diesem Zustand nicht reibschlüssig mit der in der Hohlwelle angeordneten Welle verbunden.

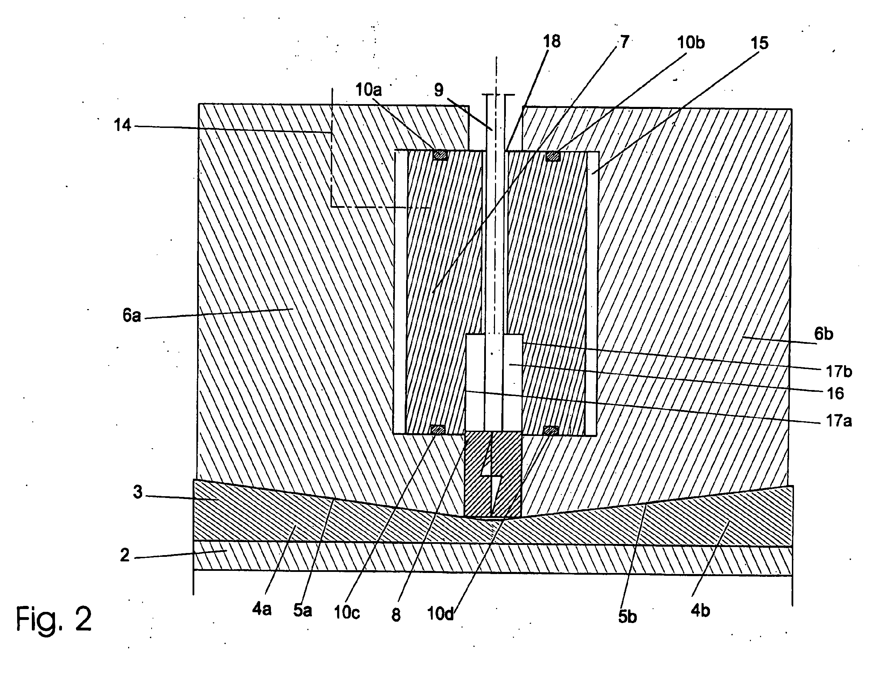

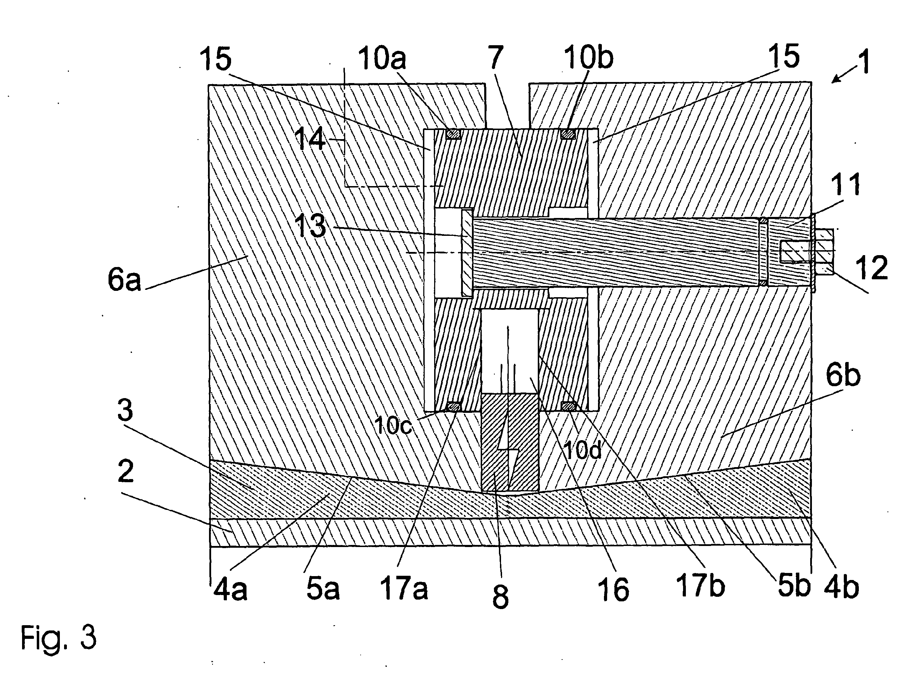

Durch Anlegen eines geeigneten Druckes an die Druckringkammer 15 über den hydraulischen Anschluß 14 gleiten die Spannringelemente 6a, 6b auf den schrägen Außenflächen 5a, 5b der Keilringabschnitte 4a, 4b auseinander und erreichen eine Spannlage, die in Fig. 2 in einer Schnittdarstellung entlang der Schnittlinie B-B gezeigt ist. In der Spannlage üben die Spannringelemente 6a, 6b einen definierten Druck auf die Keilringanordnung 3 und somit auf die Hohlwelle 2 aus. Hierdurch wird die Hohlwelle 2 reibschlüssig mit der Welle verbunden. Die Haltebolzen 11 verhindern in dieser Stellung ein weiteres Spreizen der Spannringelemente 6a und 6b, wie in Fig. 3 gezeigt.

Über eine Betätigung der Stangen 9 werden die Sicherungselemente 8 von der freien Position in der Aufnahme 16 in die Klemmposition zwischen den beiden Spannringelementen 6a, 6b gebracht. Dieser Zustand ist in Fig. 2 gezeigt. Die Sicherungselemente 8 sichern die axiale Stellung der Spannringelemente 6a, 6b in der Spannlage gegen ein axiales Verschieben und gegen ein Zurückgleiten der Spannringelemente 6a, 6b in die Ausgangslage nach Druckabbau des hydraulischen Drucks in der Druckringkammer 15. Die reibschlüssige Verbindung zwischen Hohlwelle 2 und innenliegender Welle kann nun ohne hydraulischen Druck aufrechterhalten werden.

Zur Aufhebung der reibschlüssigen Verbindung zwischen Hohlwelle 2 und Welle ist wiederum der Aufbau eines hydraulischen Drucks in der Druckringkammer 15 über den hydraulischen Anschluß 14 notwendig, so daß die Klemmung zwischen den Sicherungselementen und den Spannringelementen aufgehoben wird. Durch erneute Betätigung der Stangen 9 werden die Sicherungselemente 8 aus der Klemmposition in die freie Position in der Aufnahme 16 in dem Ringkolben 7 zurückgezogen. Bei Druckabbau des hydraulischen Drucks in der Druckringkammer 15 gleiten die Spannringelemente 6a und 6b, bedingt durch die über die schrägen Außenflächen 5a, 5b der Keilringabschnitte 4a, 4b wirkenden Kräfte in ihre Ausgangslage zurück, wodurch die reibschlüssige Verbindung zwischen Hohlwelle 2 und innenliegender Welle aufgehoben ist.

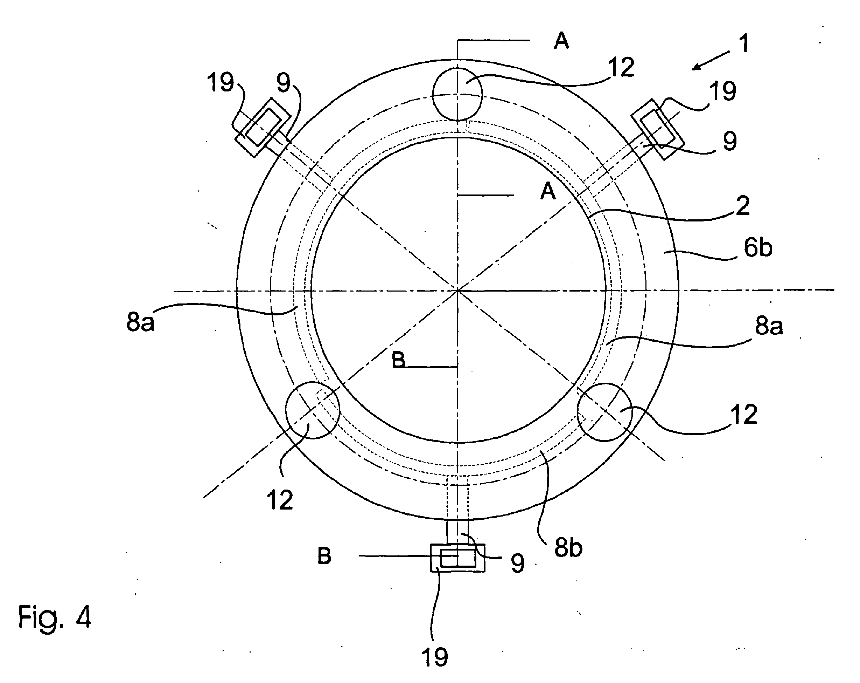

Fig. 4 zeigt eine schematische Draufsicht der Drehverbindung 1 entlang der Wellenachse. Die Schrauben 12 der Haltebolzen 11 sind in regelmäßiger Teilung auf einer Umfangslinie auf den Spannringelementen 6a, 6b angeordnet. Die Stangen 9 weisen an den aus dem Ringkolben 7 weisenden Enden Handgriffe 19 zur Betätigung auf. Die segmentartig ausgebildeten Sicherungselemente 8 umschließen den Umfang der Hohlwelle 2 fast vollständig. Somit ist der Druck der Spannringelemente 6a, 6b auf die Sicherungselemente 8 auf relativ große Seitenflächen der Sicherungselemente 8 verteilt. Die beiden Sicherungselemente 8a sind in Klemmposition gezeigt, das Sicherungselement 8b befindet sich in freier Position.

Es wird darauf hingewiesen, daß die Zeichnungen nicht maßstäblich zu verstehen sind.

## Patentansprüche

1. Reibschlüssige Drehverbindung mit
- einer auf eine Welle aufsetzbaren Hohlwelle (2) und einer Keilringanordnung (3) aus mindestens einem Keilringabschnitt (z.B. 4a) mit einer Innenfläche zur Anlage an die Hohlwelle (2) und mit einer schrägen Außenfläche (z.B. 5a),
- mindestens einem Spannringelement (z.B. 6a) mit schräger Innenfläche, das zwischen einer Ausgangslage und einer Spannlage auf der schrägen Außenfläche (z. B. 5a) des Keilringabschnitts (z.B. 4a) gleitet und
- Spannmitteln zum Bewegen des Spannringelementes (z. B. 6a) in die Spannlage,
**dadurch gekennzeichnet, daß**
außer den Spannmitteln mindestens ein gesondertes Sicherungselement (8) zum Festsetzen des Spannringelementes (z.B. 6a) in der Spannlage vorgesehen ist, das in radialer Richtung unabhängig von den Spannmitteln von einer freien Position in eine Klemmposition führbar ist, in der das Sicherungselement (8) das Spannringelement (z.B. 6a) axial arretiert.

2. Reibschlüssige Drehverbindung nach Anspruch 1, **dadurch gekennzeichnet, daß** die Spannmittel eine Druckringkammer (15) sind.

3. Reibschlüssige Drehverbindung nach Anspruch 1 oder 2, **dadurch gekennzeichnet, daß** das Sicherungselement (8) segmentförmig ausgebildet ist.

4. Reibschlüssige Drehverbindung nach einem der Ansprüche 1 - 3, **dadurch gekennzeichnet, daß** drei Sicherungselemente (8) auf einer Umfangslinie der Keilringanordnung (3) angeordnet sind.

5. Reibschlüssige Drehverbindung nach einem der Ansprüche 2-4, **dadurch gekennzeichnet, daß** ein Ringkolben (7) in der Druckringkammer (15) angeordnet ist, der eine Aufnahme (16) für das Sicherungselement (8) in der freien Position und eine Führung (17a, 17b) für die Bewegung bildet.

6. Reibschlüssige Drehverbindung nach Anspruch 5, **dadurch gekennzeichnet, daß** der Ringkolben (7) Ausnehmungen (10a-10d) für Ringdichtungen aufweist, die die Druckringkammer (15) gegenüber der Welle, dem Sicherungselement (8) und der Umgebung abdichten.

7. Reibschlüssige Drehverbindung nach Anspruch 5 oder 6, **dadurch gekennzeichnet, daß** das Sicherungselement (8) mindestens eine Steuerstange aufweist, die sich durch eine Öffnung im Ringkolben (7) von der Druckringkammer (15) fluidgetrennt nach außen erstreckt.

8. Reibschlüssige Drehverbindung nach einem der vorhergehenden Ansprüche, **dadurch gekennzeichnet, daß** mindestens ein Federelement derart mit dem Sicherungselement (8) zusammenwirkt, das die Bewegung in die Klemmposition kraftunterstützt ist.

9. Reibschlüssige Drehverbindung nach einem der vorhergehenden Ansprüche, **dadurch gekennzeichnet, daß** die Neigung der schrägen Außenfläche (z.B. 5a) des Keilringabschnitts (z.B. 4a) so gewählt ist, daß der mit der Mittelachse der Welle eingeschlossene Winkel größer 5°, vorzugsweise 7°-10° ist.

## Claims

1. Rotary connecting means based on frictional engagement, having
- a hollow shaft (2) to be placed on a shaft and a tapered ring arrangement (3) of at least one tapered ring section (e.g. 4a) with an inner surface for abutting the hollow shaft (2), and with an oblique outer surface (e.g. 5a);
- at least one tensioning ring element (e.g. 6a) having an oblique inner surface, which element slides between a starting position and a tensioning position along the oblique outer surface (e.g. 5a) of the tapered ring section (e.g. 4a); and
- tensioning means for moving the tensioning ring element (e.g. 6a) into the tensioning position,
**characterized in that**
in addition to the tensioning means there is provided at least one separate retaining element (8) for securing the tensioning ring element (e.g. 6a) in the tensioning position, which element is arranged to be guided in a radial direction independent of the tensioning means from a free position into a tensioning position in which the retaining element (8) axially blocks the tensioning ring element (e.g. 6a).

2. Rotary connecting means based on frictional engagement, as claimed as claim 1, **characterized in that** the tensioning means are arranged by way of a pressure ring chamber (15).

3. Rotary connecting means based on frictional engagement, as claimed as claims 1 or claim 2, **characterized in that** the retaining element (8) is designed in segment shape.

4. Rotary connecting means based on frictional engagement, as claimed in anyone of claims 1 to 3, **characterized in that** three retaining elements (8) are arranged along a circumferential line of the tapered ring arrangement (3).

5. Rotary connecting means based on frictional engagement, as claimed in anyone of claims 2 to 4, **characterized in that** there is provided an annular piston (7) within the pressure ring chamber (15), which piston forms a receptacle (16) for the retaining element (8) in the free position and a guide (17a, 17b) during movement.

6. Rotary connecting means based on frictional engagement, as claimed in claim 5, **characterized in that** the annular piston (7) has recesses (10a - 10d) for annular seals which seal pressure ring chamber (15) with regard to the shaft, the retaining element (8) and the surroundings.

7. Rotary connecting means based on frictional engagement, as claimed in claim 5 or claim 6, **characterized in that** the retaining element (8) has at least one control rod extending through an opening within the annular piston (7) outwardly from the pressure ring chamber (15) and separated regarding fluid.

8. Rotary connecting means based on frictional engagement, as claimed in anyone of the preceding claims, **characterized in that** at least one spring element cooperates with the retaining element (8) in such manner that the movement into the tensioning position is supported by force.

9. Rotary connecting means based on frictional engagement, as claimed in anyone of the preceding claims, **characterized in that** the inclination of the oblique outer surface (e.g. 5a) of the tapered ring section (e.g. 4a) is such that its angle with regard to the central axle of the shaft is larger than 5°, preferably 7° to 10°.

## Revendications

1. Joint tournant entraîné par friction avec
- un arbre creux (2) pouvant être posé sur un arbre et un arrangement de bague conique (3) constitué par au moins une section de bague conique (par exemple 4a) avec une surface intérieure pour l'appui sur l'arbre creux (2) et avec une surface extérieure inclinée (par exemple 5a),
- au moins un élément d'anneau de serrage (par exemple 6a) avec une surface intérieure inclinée qui glisse entre une position de départ et une position de serrage sur la surface extérieure inclinée (par exemple 5a) de la section de bague conique (par exemple 4a) et
- des moyens de serrage pour mouvoir l'élément d'anneau de serrage (par exemple 6a) dans la position de serrage,
**caractérisé en ce**
**qu'**en dehors des moyens de serrage il est prévu au moins un élément d'arrêt séparé (8) pour bloquer l'élément d'anneau de serrage (par exemple 6a) dans la position de serrage qui peut être guidé dans le sens radial indépendamment des moyens de serrage d'une position libre à une position de serrage dans laquelle l'élément d'arrêt (8) bloque axialement l'élément d'anneau de serrage (par exemple 6a).

2. Joint tournant entraîné par friction selon la revendication 1, **caractérisé en ce que** les moyens de serrage sont une chambre à bague de pression (15).

3. Joint tournant entraîné par friction selon la revendication 1 ou 2, **caractérisé en ce que** l'élément d'arrêt (8) est configuré en forme de segment.

4. Joint tournant entraîné par friction selon l'une des revendications 1 à 3, **caractérisé en ce que** trois éléments d'arrêt (8) sont placés sur une ligne circonférentielle de l'arrangement de bague conique (3).

5. Joint tournant entraîné par friction selon l'une des revendications 2 à 4, **caractérisé en ce qu'**un piston annulaire (7) est placé dans la chambre à bague de pression (15) qui forme un logement (16) pour l'élément d'arrêt (8) dans la position libre et un guidage (17a, 17b) pour le mouvement.

6. Joint tournant entraîné par friction selon la revendication 5, **caractérisé en ce que** le piston annulaire (7) présente des réservations (10a,10d) pour des joints annulaires qui étanchent la chambre à bague de pression (15) par rapport à l'arbre, à l'élément d'arrêt (8) et à l'environnement.

7. Joint tournant entraîné par friction selon la revendication 5 ou 6, **caractérisé en ce que** l'élément d'arrêt (8) présente au moins une tige de commande qui s'étend vers l'extérieur à travers une ouverture dans le piston annulaire (7) en étant séparée des fluides de la chambre à bague à pression (15).

8. Joint tournant entraîné par friction selon l'une des revendications précédentes, **caractérisé en ce qu'**au moins un élément à ressort coopère avec l'élément d'arrêt de telle manière que le mouvement dans la position de serrage est soutenu en force.

9. Joint tournant entraîné par friction selon l'une des revendications précédentes, **caractérisé en ce que** l'inclinaison de la surface extérieure oblique (par exemple 5a) de la section de bague conique (par exemple 4a) est choisie de telle manière que l'angle inscrit avec l'axe central de l'arbre est supérieur à 5°, de préférence de 7 À 10°.
